# EUROPEAN PATENT SPECIFICATION

(11) **EP 3 657 358 B1**
(45) Date of publication and mention of the grant of the patent: **17.01.2024**
(21) Application number: 18834444.4
(22) Date of filing: 24.01.2018
(51) Int. Cl.: G06F 9/455, G06F 3/06

(54) **METHOD, DEVICE AND SYSTEM FOR PERSISTENT DATA PROCESSING, AND READABLE STORAGE MEDIUM**
VERFAHREN, VORRICHTUNG UND SYSTEM ZUR PERSISTENTEN DATENVERARBEITUNG UND LESBARES SPEICHERMEDIUM
PROCÉDÉ, DISPOSITIF ET SYSTÈME DE TRAITEMENT DE DONNÉES PERMANENT ET SUPPORT DE STOCKAGE LISIBLE

(30) Priority: 20.07.2017 CN 201710596099
(43) Date of publication of application: 27.05.2020
(73) Proprietor: ZTE Corporation, Shenzhen, Guangdong 518057 (CN)
(72) Inventor: ZHOU, Lei, Shenzhen Guangdong 518057 (CN)
(74) Representative: Baudler, Ron
(86) International application number: PCT/CN2018/073956
(87) International publication number: WO 2019/015288

(56) References cited:
- CN-A- 105 808 312
- CN-A- 106 598 789
- CN-A- 106 874 357
- CN-A- 107 193 504
- US-B1- 9 678 683
- Anonymous: "OpenShift Enterprise 3.1 - Configuring Persistent Storage Using NFS", , 17 August 2016 (2016-08-17), pages 1-9, XP055795099, Retrieved from the Internet: URL:http://web.archive.org/web/20160817162 826/https://docs.openshift.com/enterprise/ 3.1/install_config/persistent_storage/pers istent_storage_nfs.html [retrieved on 2021-04-14]
- Anonymous: "Kubernetes - Persistent Volumes", , 6 June 2017 (2017-06-06), pages 1-26, XP055795087, Retrieved from the Internet: URL:http://web.archive.org/web/20170606175 504/https://kubernetes.io/docs/concepts/st orage/persistent-volumes/ [retrieved on 2021-04-14]

## Description

### FIELD OF THE INVENTION

The present disclosure relates to the field of virtualization technologies, and in particular to a method, device and system for persistent data processing, and a readable storage medium.

### BACKGROUND

With the development of virtualization technologies, virtual container management platforms such as Google open source container cluster management system and Kubernetes, can provide various functional services including resource scheduling, deployment and operation, service discovery, capacity expansion and reduction and the like for mounted containerized applications. Since internal data of a containerized application will disappear along with disappear, restart and migration of the application itself, persistent data storage for the containerized application is a service item more frequently selected by a user.

In some cases, to solve the problem of persistent data storage for the containerized application, a user needs to manually create path information, e.g., a persistent volume claim (PVC) and a persistent volume (PV), of the containerized application data on a virtual container management platform, Kubernetes or OpenShift, in which PV is an abstraction of data to be persistently stored on the corresponding server side, and PVC is an abstract claim for PV. PVC and PV are in one-to-one correspondence, and the internal data of the containerized application can be stored in a network access storage (NAS) server only when information such as an IP address, a user name, a password, and a type of the NAS server are acquired from the virtual container management platform Kubernetes or OpenShift. Therefore, there are problems of information security risk and poor user experience while internal data of a containerized application is persistently stored.

"OpenShift Enterprise 3.1- Configuring Persistent Storage Using NFS" discloses that Open Shift clusters can be provisioned with persistent storage using NFS. Persistent volumes (PVs) and persistent volume claims (PVCs) provide a convenient method for sharing a volume across a project.

"Kubernetes-Persistent Volumes" discloses that the PersistentVolume subsystem provides an API for users and administrators that abstracts details of how storage is provided from how it is consumed.

### SUMMARY

The invention is defined by the independent claims. Specific embodiments are defined by the dependent claims.

A main objective of the present disclosure is to provide a method, device and system for persistent data processing, and a readable storage medium, so as to solve the problems in the related art of low security level of information and poor user experience while internal data of a containerized application is persistently stored.

To achieve the above objectives, the present disclosure provides a method for persistent data processing, wherein the data includes a containerized application mounted on a virtual container management platform, and the method for persistent data processing includes steps of: acquiring, upon detecting a persistent processing instruction for a containerized application, volume attribute information and volume content of the containerized application based on the persistent processing instruction; creating, based on the volume attribute information, a storage volume in a corresponding network access storage (NAS) type server, and storing the volume content in the storage volume; and creating, based on the volume attribute information, a persistent volume directory corresponding to the volume content in the NAS type server, and creating path information for a persistent volume on the virtual container management platform.

Further, to achieve the above objectives, the present disclosure further provides a device for persistent data processing. The device for persistent data processing includes a memory, a processor, a communication bus and a program for persistent data processing stored in the memory, the communication bus is configured to enable communication connection between the processor and the memory, and the processor is configured to execute the program for persistent data processing to implement the steps of: acquiring, upon detecting a persistent processing instruction for a containerized application, volume attribute information and volume content of the containerized application based on the persistent processing instruction; creating, based on the volume attribute information, a storage volume in a corresponding network access storage (NAS) type server, and storing the volume content in the storage volume; and creating, based on the volume attribute information, a persistent volume directory corresponding to the volume content in the NAS type server, and creating path information for a persistent volume on the virtual container management platform.

Further, to achieve the above objectives, the present disclosure further provides a system for persistent data processing, including a virtual container management platform, a system server, and a device for persistent data processing for implementing the above method for persistent data processing.

Further, to achieve the above objectives, the present disclosure further provides a readable storage medium having one or more programs for persistent data processing stored therein, the one or more programs for persistent data processing being executable by one or more processors to implement the steps of the above method for persistent data processing: acquiring, upon detecting a persistent processing instruction for a containerized application, volume attribute information and volume content of the containerized application based on the persistent processing instruction; creating, based on the volume attribute information, a storage volume in a corresponding network access storage (NAS) type server, and storing the volume content in the storage volume; and creating, based on the volume attribute information, a persistent volume directory corresponding to the volume content in the NAS type server, and creating path information for a persistent volume on the virtual container management platform.

### BRIEF DESCRIPTION OF THE DRAWINGS

Fig. 1 is a schematic flowchart of a first embodiment of the method for persistent data processing of the present disclosure;
Fig. 2 is a schematic flowchart of a second embodiment of the method for persistent data processing of the present disclosure;
Fig. 3 is a schematic flowchart of a third embodiment of the method for persistent data processing of the present disclosure;
Fig. 4 is a schematic flowchart of a fourth embodiment of the method for persistent data processing of the present disclosure;
Fig. 5 is a schematic flowchart of a fifth embodiment of the method for persistent data processing of the present disclosure;
Fig. 6 is a schematic flowchart of a sixth embodiment of the method for persistent data processing of the present disclosure;
Fig. 7 is a schematic diagram of a system for persistent data processing of the present disclosure comprised of a virtual container management platform, a system server, and a device for persistent data processing; and
Fig. 8 is a schematic diagram of an apparatus structure of a hardware operating environment related to the methods for persistent data processing according to various embodiments of the present disclosure.

Means for achieving the objectives, functional features, and technical advantages of the present disclosure will be further described with reference to the accompanying drawings in combination with the embodiments.

### DETAILED DESCRIPTION OF THE EMBODIMENTS

The present disclosure provides a method for persistent data processing performed on data. In the embodiments of the method for persistent data processing of the present disclosure, the method for persistent data processing is applied to a device for persistent data processing which may be a device for persistent data processing in a Google open source container cluster management system (Kubernetes) or RedHat commercial container cluster management system (OpenShift), and the data includes a containerized application mounted on a virtual container management platform Kubernetes or OpenShift.

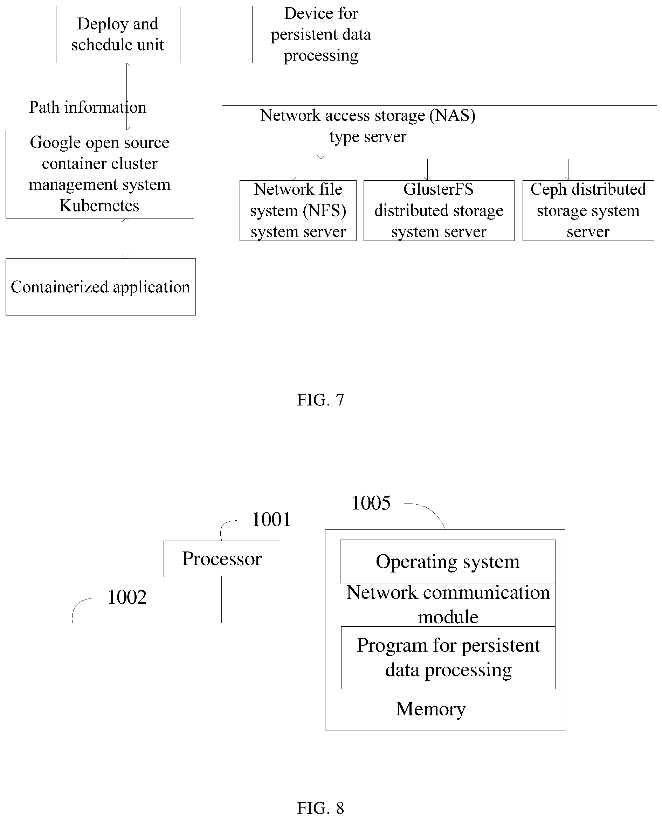

In the present disclosure, the method for persistent data processing is applied to a device for persistent data processing in a Google open source container cluster management system (Kubernetes) or a RedHat commercial container cluster management system (OpenShift), the data includes a containerized application mounted on the Google open source container cluster management system (Kubernetes), and the device for persistent data processing in the Google open source container cluster management system (Kubernetes) or the RedHat commercial container cluster management system (OpenShift) includes a storage management component and the like. The storage management component may be software packaged on an upper virtual container management platform for providing persistent data storage, and by means of the device for persistent data processing in the Google open source container cluster management system (Kubernetes) or the RedHat commercial container cluster management system (OpenShift), the containerized application required by a user to be persistently stored can be persistently stored in a corresponding target memory, and a query or access path to the containerized application is generated. A schematic diagram of a system for persistent data processing of the present disclosure comprised of a virtual container management platform, a target memory or a system server, and a device for persistent data processing is as shown in Fig. 7.

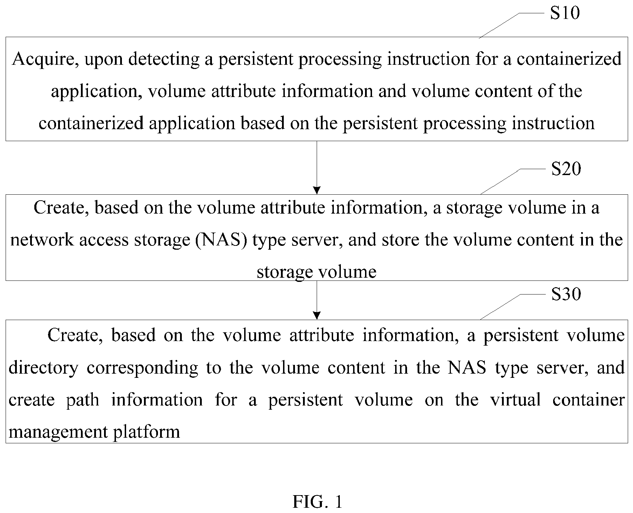

Referring to Fig. 1, a first embodiment of the method for persistent data processing includes the following steps S10 to S30.

At step S10, acquiring, upon detecting a persistent processing instruction for a containerized application, volume attribute information and volume content of the containerized application based on the persistent processing instruction.

In the present disclosure, before the device for persistent data processing on the upper virtual container management platform detects a persistent processing instruction for the containerized application, a registered user or tenant of the upper virtual container management platform may request a persistent storage service at a corresponding containerized application interface. After the user requests the persistent storage service via a mouse click or screen touch at the corresponding containerized application interface, request information is generated. The request information is representational state transfer information Restful that can be obtained by selecting on the interface of the containerized application by the user, and that carries information such as volume type (Fstype), volume name, volume size of the containerized application. Based on the volume type (Fstype) of the containerized application, an NAS type server required by the user is acquired, i.e., the type of NAS servers where the containerized application is to be persistently stored by the user is acquired. The NAS type server includes, for example, a network file system (NFS) system server, a GlusterFS distributed storage system server, and a Ceph distributed storage system server, etc. After acquiring the request information from the user, the upper virtual container management platform transmits a persistent processing instruction for the containerized application based on the request information, and the device for persistent data processing calls an interface of a corresponding virtual container management platform (Kubernetes or OpenShift) to acquire volume attribute information and volume content of the containerized application based on the persistent processing instruction. The volume attribute information and the volume content are all the internal data forming the containerized application, and the volume attribute information is acquired by the device for persistent data processing in Kubernetes based on the request information, or abstracted from all the internal data of the containerized application. By way of example, the volume content may be file content of the containerized application, and the volume attribute information may be, for example, a file name.

At step S20, creating a storage volume in a network access storage (NAS) type server based on the volume attribute information and storing the volume content in the storage volume.

After acquiring the volume attribute information, the device for persistent data processing parses the volume attribute information to acquire the containerized application, or a target NAS type server or target database that persistently stores the internal data of the containerized application. After confirming the target NAS type server or target database, the device for persistent data processing calls a persistent processing interface of the virtual container management platform (Kubernetes or OpenShift), controls to create a storage volume in the target NAS type server and store the corresponding volume content in the storage volume.

At step S30, creating, based on the volume attribute information, a persistent volume directory corresponding to the volume content in the NAS type server, and creating path information for a persistent volume on the virtual container management platform.

The path information of the persistent volume includes a persistent volume claim (PVC) and a persistent volume (PV). The persistent volume directory corresponding to the volume content may be firstly created in the NAS type server, and then the path information for a persistent volume, for example, a persistent volume claim (PVC) or a persistent volume (PV), is created on the virtual container management platform (Kubernetes or OpenShift).

By way of example, when the target NAS type server acquired after parsing the volume attribute information is a GlusterFS distributed storage system server, a persistent volume directory is created on the GlusterFS server under control of a security shell protocol (SSH), and the directory name is in the form of Namespace or Namespace + Volume Name. After the creation of the persistent volume directory is completed, a recording state of the storage volume is changed to a Create_Endpoints state. According to the storage volume in the Create _Endpoints state and the volume attribute information, IP address information of respective nodes of the containerized application in the GlusterFS server is created under a corresponding namespace of the virtual container management platform (Kubernetes or OpenShift), and after the creation is completed, the recording state of the storage volume is changed to a Create_PVC state. Based on the storage volume in the CreatePVC state, a PVC having the same name as the storage volume is created under a corresponding Namespace of the virtual container management platform (Kubernetes or OpenShift). A size of the storage volume, i.e., the volume size, is recorded in the PVC, and a name of the PV to be created or created, which is in the form of Namespace plus Volume Name, is recorded in the PVC. After the creation of the PVC is completed, the recording state of the storage volume is changed to a Create_PV state, and based on the storage volume in the Create_PV state, a PV with a name in the form of Namespace plus Volume Name is created on the corresponding virtual container management platform (Kubernetes or OpenShift), where the PVC name is recorded in the PV. In addition, the creation order of the persistent volume directory, the PVC, and the PV is changeable, and is not particularly limited herein.

In this embodiment, upon detecting a persistent processing instruction for a containerized application, volume attribute information and volume content of the containerized application are acquired based on the persistent processing instruction; a storage volume is created in a network access storage (NAS) type server based on the volume attribute information and the volume content is stored in the storage volume; based on the volume attribute information, a persistent volume directory corresponding to the volume content is created in the NAS type server, and path information for a persistent volume is created on the virtual container management platform. Since the volume attribute information and the volume content of the containerized application are abstractly acquired through the device for persistent data processing, and a persistent volume directory, a PVC and a PV are created based on the volume attribute information and the volume content, which means that the process does not need to be manually created by a user and the user does not need to know the information of the NAS type server, the problems of information security risks, user's time and energy waste, and poor user experience when the internal data of a containerized application is persistently stored are solved.

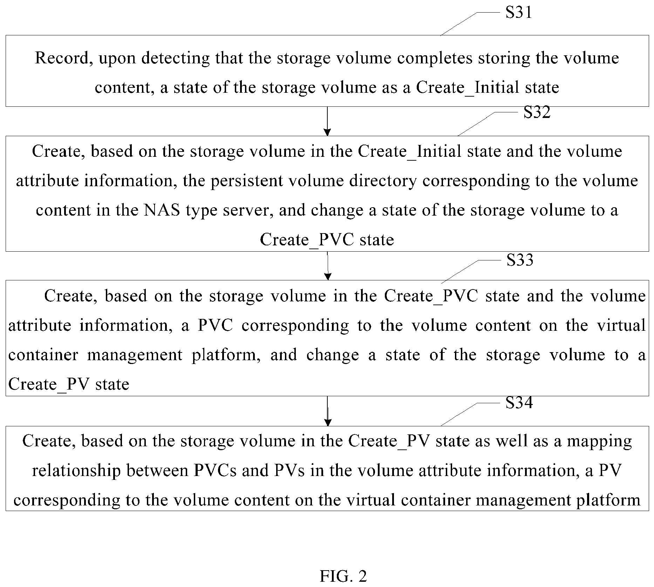

On the basis of the first embodiment of the method for persistent data processing of the present disclosure, a second embodiment of the method for persistent data processing is provided. In the second embodiment, referring to Fig. 2, the path information of the persistent volume includes a persistent volume claim (PVC) and a persistent volume (PV), and the Step S30 includes the following steps S31 to S34.

At step S31, recording a state of the storage volume as a Create_Initial state, upon detecting that the storage volume completes storing the volume content.

At step S32, creating, based on the storage volume in the Create_Initial state and the volume attribute information, the persistent volume directory corresponding to the volume content in the NAS type server, and changing a state of the storage volume to a Create_PVC state.

At step S33, creating, based on the storage volume in the Create_PVC state and the volume attribute information, a PVC corresponding to the volume content on the virtual container management platform, and changing a state of the storage volume to a Create_PV state.

At step S34, creating, based on the storage volume in the Create_PV state as well as a mapping relationship between PVCs and PVs in the volume attribute information, a PV corresponding to the volume content on the virtual container management platform.

By way of example, when the target NAS type server acquired after parsing the volume attribute information is a network file system (NFS) system server, a persistent volume directory is created on the NFS system server based on the storage volume in the Create_initial state, and the directory name is in the form of Namespaces or Namespaces + Volume Name. After the creation of the persistent volume directory is completed, a state of the storage volume is changed to a Create_PVC state, a PVC having a recorded size of the storage volume, i.e., a recorded volume size, is automatically created under a Namespace of the virtual container management platform (Kubernetes or OpenShift), and a name of the PV to be created or created, which is in the form of a Namespace plus a Volume Name, is recorded in the PVC. After the creation of the PVC is completed, the recording state of the storage volume is changed to a Create_PV state, and a PV with a name in the form of a Namespace plus a Volume Name is created on the corresponding virtual container management platform (Kubernetes or OpenShift), where the PVC name is recorded in the PV. The storage volume stored in the NFS system server can be inquired through the PVC and the PV.

Further, as described above, the creation order of the persistent volume directory, the PVC, and the PV is changeable or exchangeable, and is not particularly limited herein. In other words, any other orders different from the creation order in the second embodiment may be adopted.

In this embodiment, upon detecting that the storage volume completes storing the volume content, a state of the storage volume is recorded as a Create_Initial state; based on the storage volume in the Create_Initial state and the volume attribute information, the persistent volume directory corresponding to the volume content is created in the NAS type server, and a state of the storage volume is changed to a Create_PVC state; based on the storage volume in the Create_PVC state and the volume attribute information, a PVC corresponding to the volume content is created on the virtual container management platform (Kubernetes or OpenShift), and a state of the storage volume is changed to a Create_PV state; and based on the storage volume in the Create_PV state as well as a mapping relationship between PVCs and PVs in the volume attribute information, a PV corresponding to the volume content is created on the virtual container management platform. Due to the creation of the persistent volume directory, the PVC and the PV, the problems of information security risks, user's time and energy waste, and poor user experience while internal data of a containerized application is persistently stored are solved.

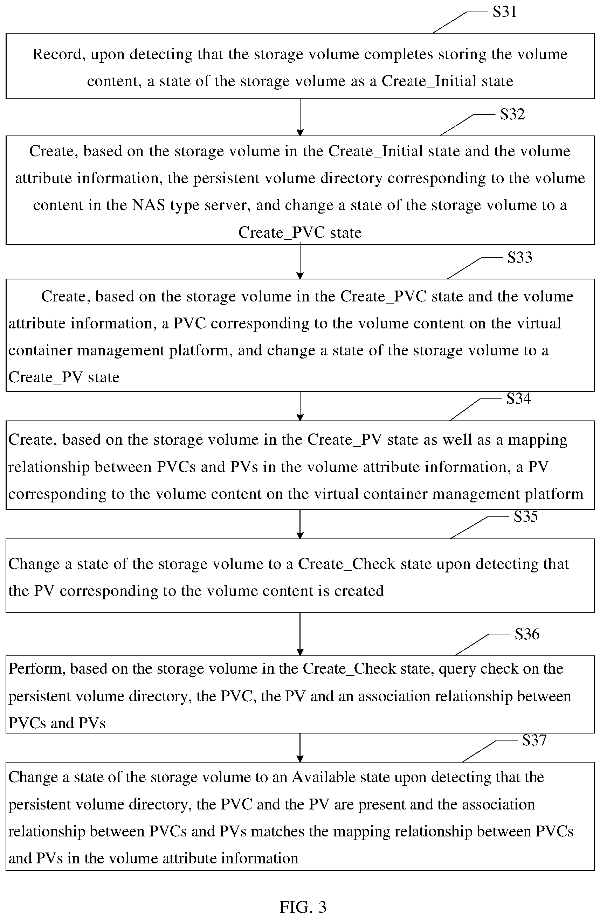

On the basis of the second embodiment of the method for persistent data processing of the present disclosure, a third embodiment of the method for persistent data processing is provided. In the third embodiment, as shown in Fig. 3, following the step S34, the step S30 further includes the following steps S35 to S37.

At step S35, changing a state of the storage volume to a Create_Check state upon detecting that the PV corresponding to the volume content is created.

At step S36, performing, based on the storage volume in the Create_Check state, query check on the persistent volume directory, the PVC, the PV and an association relationship between PVCs and PVs.

At step S37, changing a state of the storage volume to an Available state upon detecting that the persistent volume directory, the PVC and the PV are present and the association relationship between PVCs and PVs matches the mapping relationship between PVCs and PVs in the volume attribute information.

After the creation of the persistent volume directory, the PVC, and the PV is completed, a state of the storage volume is changed to a Query_Check state, and a query check processing is performed on the created persistent volume directory, PVC and PV, and an association relationship between PVCs and PVs. When it is detected that the persistent volume directory, the PVC and the PV are present and the association relationship between PVCs and PVs matches the mapping relationship between PVCs and PVs in the volume attribute information, a state of the storage volume is changed to an Available state. When a careless mistake or error occurs, an error report is generated and the storage volume is regenerated.

In this embodiment, when it is detected that the PV corresponding to the volume content is created, a state of the storage volume is changed to a Create_Check state. Based on the storage volume in the Create_Check state, a query check processing is performed on the persistent volume directory, the PVC, the PV and the association relationship between PVCs and PVs. When it is detected that the persistent volume directory, the PVC and the PV are present and the association relationship between PVCs and PVs matches the mapping relationship between PVCs and PVs in the volume attribute information, a state of the storage volume is changed to an Available state. Since the query check is performed after the creation of the persistent volume directory, the PVC and the PV, the phenomenon that unsuccessful persistent storage of the application container cannot be prompted in time can be effectively prevented.

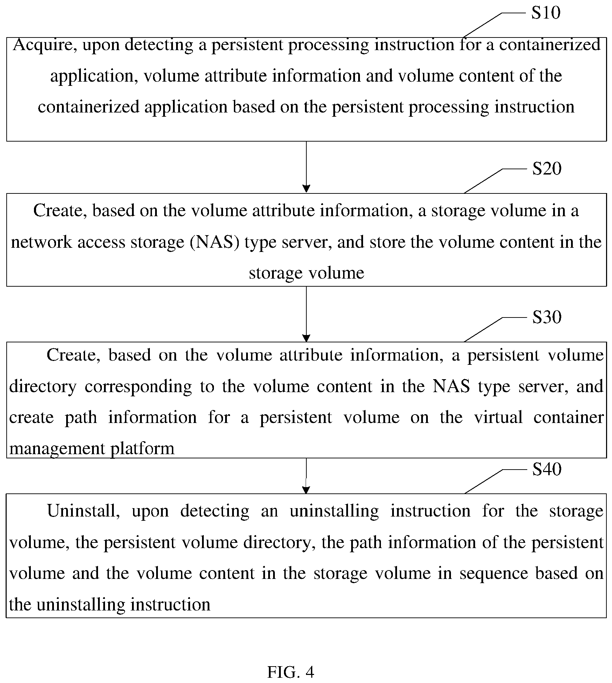

On the basis of the first embodiment of the method for persistent data processing of the present disclosure, a fourth embodiment of the method for persistent data processing is provided. In the fourth embodiment, as shown in Fig. 4, following the step S30, the method for persistent data processing further includes step 40.

At step S40, uninstalling, based on an uninstalling instruction, the persistent volume directory, the path information of the persistent volume and the volume content in the storage volume in sequence upon detecting the uninstalling instruction for the storage volume.

In this embodiment, when the user needs to uninstall a storage volume in the containerized application, path information of the virtual container management platform (Kubernetes or OpenShift) is acquired based on the uninstalling instruction, based on the path information a target storage volume is queried, and then the persistent volume directory, and the path information of the persistent volume (such as, PVC, PV, and volume content) in the target storage volume are uninstalled in sequence.

In this embodiment, when an uninstalling instruction for the storage volume is detected, the persistent volume directory, the path information of the persistent volume and the volume content in the storage volume are uninstalled in sequence based on the uninstalling instruction. Since the storage volume can be orderly installed after creation, and the user does not need to manually acquire the information of the memory, the user experience and the information security performance are improved.

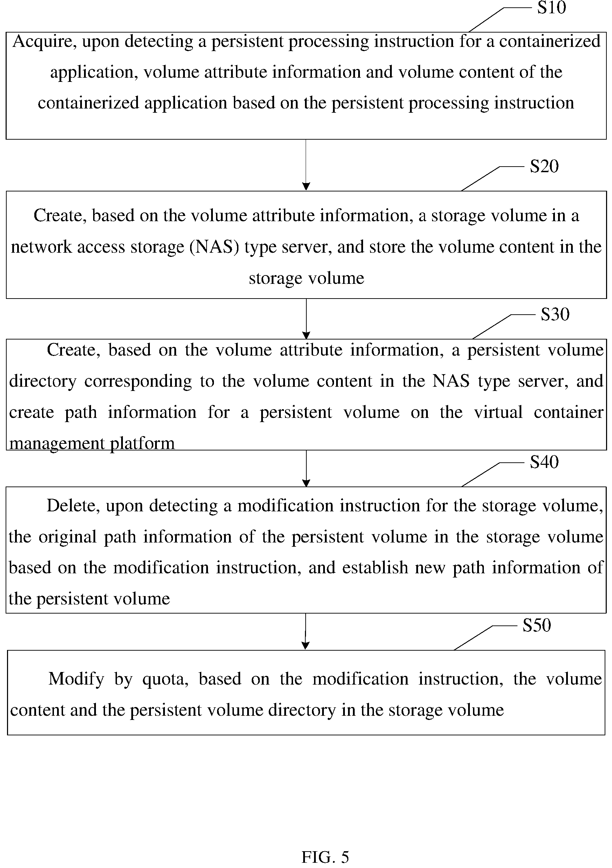

On the basis of the first embodiment of the method for persistent data processing of the present disclosure, a fifth embodiment of the method for persistent data processing is provided. In the fifth embodiment, as shown in Fig. 5, following the step S30, the method for persistent data processing further includes the steps of S40 to S50.

At step S40, deleting, based on a modification instruction, the original path information of the persistent volume in the storage volume upon detecting the modification instruction for the storage volume, and establishing new path information of the persistent volume.

At step S50, modifying by quota, based on the modification instruction, the volume content and the persistent volume directory in the storage volume.

When a modification instruction for the storage volume is detected, the original path information of the persistent volume in the storage volume, such as the original PVC and PV, is deleted based on the modification instruction, and new path information of the persistent volume, such as new PVC and PV, is reestablished based on the storage volume content. In addition, during the modification of the storage volume content, the volume content and the persistent volume directory in the storage volume are modified by quota. The term "modified by quota" means that the modified content of the containerized application is synchronously modified in the storage volume, and if volume parameters are changed due to the modification of the containerized application content, the persistent volume directory is synchronously modified based on the changed volume parameters.

In this embodiment, when a modification instruction for the storage volume is detected, the original path information of the persistent volume in the storage volume is deleted based on the modification instruction, and new path information of the persistent volume is created; and based on the modification instruction, the volume content and the persistent volume directory in the storage volume are modified by quota. Since the modification is automatically carried out, and manual modification by a user is not necessary, the user experience can be improved.

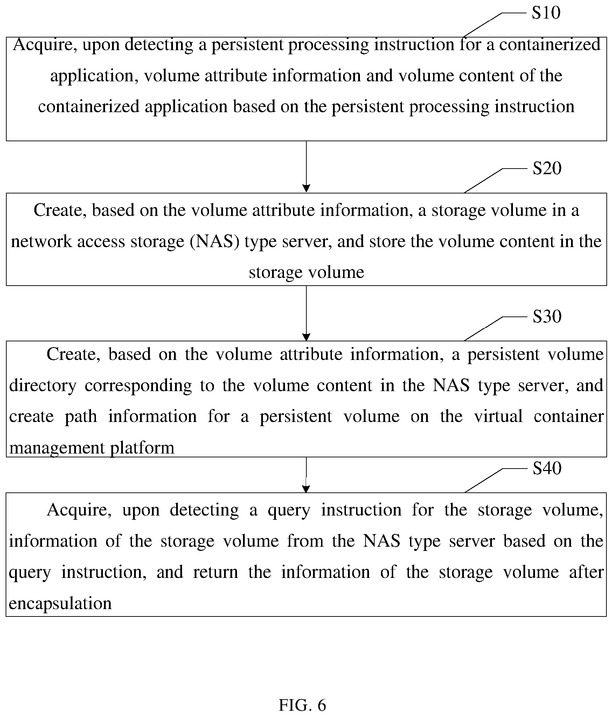

On the basis of the first embodiment of the method for persistent data processing of the present disclosure, a sixth embodiment of the method for persistent data processing is provided. In the sixth embodiment, as shown in Fig. 6, following the step S30, the method for persistent data processing further includes step 40.

At step S40, acquiring, based on a query instruction, information of the storage volume from the NAS type server upon detecting the query instruction for the storage volume, and returning the information of the storage volume after encapsulation.

When a query instruction for the storage volume is detected, information of the storage volume is acquired from the NAS type server based on the query instruction, and the information of the storage volume is return after encapsulation, where when the storage volume is queried, information of the storage volume may be returned directly from the database and encapsulated into a message reply in a Json format.

In this embodiment, when a query instruction for the storage volume is detected, information of the storage volume is acquired from the NAS type server based on the query instruction, and the information of the storage volume is return after encapsulation. Therefore, the information of the storage volume can be rapidly inquired, and the user experience is improved.

On the basis of the first embodiment of the method for persistent data processing of the present disclosure, a seventh embodiment of the method for persistent data processing is provided. In the seventh embodiment, the volume attribute information includes information of a volume type, a Volume Namespace, a Volume Name, and a volume size, and the NAS type server includes a network file system (NFS) system server, a GlusterFS distributed storage system server, and a Ceph distributed storage system server.

In this embodiment, since the NAS type server includes, for example, a network file system (NFS) system server, a GlusterFS distributed storage system server, and a Ceph distributed storage system server, the containerized application can be accurately stored in the corresponding memory based on the volume attribute information.

In this embodiment, since the volume attribute information includes information of a volume type, a Volume Namespace, a Volume Name, and a volume size, and the NAS type server includes a network file system (NFS) system server, a GlusterFS distributed storage system server, and a Ceph distributed storage system server, the containerized application can be accurately stored in the corresponding memory based on the volume attribute information.

Referring to Fig. 8, Fig. 8 is a schematic diagram of an apparatus structure of a hardware operating environment related to an exemplary method for persistent data processing of the present disclosure.

The exemplary device for persistent data processing of the present disclosure may be a Personal Computer (PC), or may be a terminal device such as a smartphone, a tablet, an electronic book reader, Moving Picture Experts Group Audio Layer III (MP3), Moving Picture Experts Group Audio Layer IV (MP4), a portable computer, or the like.

As shown in Fig. 8, the device for persistent data processing may include: a processor 1001 such as a CPU, a memory 1005 and a communication bus 1002. The communication bus 1002 is configured to enable connective communication between the processor 1001 and the memory 1005. The memory 1005 may be a high-speed random access memory (RAM) or a non-volatile memory such as a magnetic disk memory. In an embodiment, the memory 1005 may be a storage device separate from the processor 1001 as described above.

In an embodiment, the device for persistent data processing may further include a user interface, a network interface, a camera, a Radio Frequency (RF) circuit, a sensor, an audio circuit, a Wi-Fi module, and the like. The user interface may include a display, and an input unit such as a keyboard, and may further include a standard wired or wireless interface. In an embodiment, the network interface may include a standard wired or wireless interface (e.g., a Wi-Fi interface).

Those skilled in the art will appreciate that the structure of the device for persistent data processing shown in Fig. 8 does not constitute a limitation to the device for persistent data processing, which may include more or less components than those shown, or combine some components, or have differently arranged components.

As shown in Fig. 8, the memory 1005, as a computer storage medium, may include an operating system, a network communication module, and a program for persistent data processing. The operating system is a program that manages and controls hardware and software resources of a device for persistent data processing, which supports the program for persistent data processing as well as other software and /or programs. The network communication module enables communication between components within the memory 1005 and communication of components within the memory to other hardware and software in the device for persistent data processing.

In the device for persistent data processing shown in Fig. 8, the processor 1001 is configured to execute the program for persistent data processing stored in the memory 1005 to implement the steps of: acquiring, upon detecting a persistent processing instruction for a containerized application, volume attribute information and volume content of the containerized application based on the persistent processing instruction; creating, based on the volume attribute information, a storage volume in a corresponding network access storage (NAS) type server, and storing the volume content in the storage volume; and creating, based on the volume attribute information, a persistent volume directory corresponding to the volume content in the NAS type server, and creating path information for a persistent volume on the virtual container management platform.

In an embodiment, the path information of the persistent volume includes a persistent volume claim (PVC) and a persistent volume (PV), and the step of creating the persistent volume directory corresponding to the volume content in the NAS type server, and creating the path information for the persistent volume on the virtual container management platform includes: recording, upon detecting that the storage volume completes storing the volume content, a state of the storage volume as a Create_Initial state; creating, based on the storage volume in the Create_Initial state and the volume attribute information, the persistent volume directory corresponding to the volume content in the NAS type server, and changing a state of the storage volume to a Create_PVC state; creating, based on the storage volume in the Create_PVC state and the volume attribute information, a PVC corresponding to the volume content on the virtual container management platform, and changing a state of the storage volume to a Create_PV state; and creating, based on the storage volume in the Create_PV state as well as a mapping relationship between PVCs and PVs in the volume attribute information, a PV corresponding to the volume content on the virtual container management platform.

In an embodiment, following the step of creating the PV corresponding to the volume content on the virtual container management platform, the step of creating the persistent volume directory, corresponding to the volume content in the NAS type server, and creating path information for a persistent volume on the virtual container management platform further includes: changing a state of the storage volume to a Create_Check state upon detecting that the PV corresponding to the volume content is created; performing, based on the storage volume in the Create_Check state, query check on the persistent volume directory, the PVC, the PV and an association relationship between PVCs and PVs; and changing a state of the storage volume to an Available state upon detecting that the persistent volume directory, the PVC and the PV are present and the association relationship between PVCs and PVs matches the mapping relationship between PVCs and PVs in the volume attribute information.

In an embodiment, following the step of creating the persistent volume directory corresponding to the volume content in the NAS type server, and creating the path information for a persistent volume on the virtual container management platform, the method for persistent data processing further includes the step of: uninstalling, upon detecting an uninstalling instruction for the storage volume, the persistent volume directory, the path information of the persistent volume and the volume content in the storage volume in sequence based on the uninstalling instruction.

In an embodiment, following the step of creating the persistent volume directory corresponding to the volume content in the NAS type server, and creating the path information for a persistent volume on the virtual container management platform, the method for persistent data processing further includes the step of: deleting, upon detecting a modification instruction for the storage volume, the original path information of the persistent volume in the storage volume based on the modification instruction, and establishing new path information of the persistent volume; and modifying by quota, based on the modification instruction, the volume content and the persistent volume directory in the storage volume.

In an embodiment, following the step of creating the persistent volume directory corresponding to the volume content in the NAS type server, and creating the path information for a persistent volume on the virtual container management platform, the method for persistent data processing further includes the step of: acquiring, upon detecting a query instruction for the storage volume, information of the storage volume from the NAS type server based on the query instruction, and returning the information of the storage volume after encapsulation.

In an embodiment, the volume attribute information includes information of a volume type, a Volume Namespace, a Volume Name, and a volume size, and the NAS type server includes a network file system (NFS) system server, a GlusterFS distributed storage system server, and a Ceph distributed storage system server.

The implementations of the device for persistent data processing of the present disclosure are substantially the same as the embodiments of the method for persistent data processing, and thus are not repeated herein.

Further, to achieve the above objective, the present disclosure further provides a system for persistent data processing, including a virtual container management platform, a system server, and a device for persistent data processing for implementing the above method for persistent data processing.

The implementations of the system for persistent data processing of the present disclosure are substantially the same as the embodiments of the method for persistent data processing, and thus are not repeated herein.

The present disclosure further provides a readable storage medium having one or more programs stored thereon, the one or more programs being executable by one or more processors to implement the steps of the method for persistent data processing according to any of the above embodiments.

The implementations of the readable storage medium of the present disclosure are substantially the same as the embodiments of the method for persistent data processing, and thus are not repeated herein.

## Claims

1. A method for persistent data processing, wherein the data comprises a containerized application mounted on a virtual container management platform, and the method for persistent data processing comprises steps of:
acquiring request information to trigger a persistent processing instruction, the request information being representational state transfer information carrying information comprising volume type, volume name, and volume size of the containerized application;
acquiring (S10), upon detecting the persistent processing instruction for a containerized application, volume attribute information and volume content of the containerized application based on the persistent processing instruction, wherein the volume attribute information and the volume content are all the internal data forming the containerized application, the volume attribute information is acquired based on the request information or abstracted from all the internal data of the containerized application;
creating (S20), based on the volume attribute information, a storage volume in a network access storage, NAS, type server, and storing the volume content in the storage volume; and
creating (S30), based on the volume attribute information, a persistent volume directory corresponding to the volume content in the NAS type server, and creating path information for a persistent volume on the virtual container management platform,
wherein the path information of the persistent volume comprises a persistent volume claim, PVC, and a persistent volume, PV, and
the step of creating the persistent volume directory corresponding to the volume content in the NAS type server, and creating the path information for the persistent volume on the virtual container management platform comprises sub-steps of:
recording (S31), upon detecting that the storage volume completes storing the volume content, a state of the storage volume as a Create_Initial state;
creating (S32), based on the storage volume in the Create_Initial state and the volume attribute information, the persistent volume directory corresponding to the volume content in the NAS type server, and changing the state of the storage volume to a Create_PVC state;
creating (S33), based on the storage volume in the Create_PVC state and the volume attribute information, a PVC corresponding to the volume content on the virtual container management platform, and changing the state of the storage volume to a Create_PV state; and
creating (S34), based on the storage volume in the Create_PV state as well as a mapping relationship between PVCs and PVs in the volume attribute information, a PV corresponding to the volume content on the virtual container management platform.

2. The method for persistent data processing according to claim 1, wherein after the step of creating the PV corresponding to the volume content on the virtual container management platform, the step of creating the persistent volume directory corresponding to the volume content in the NAS type server, and the step of creating the path information for a persistent volume on the virtual container management platform further comprises sub-steps of:
changing (S35) a state of the storage volume to a Create_Check state upon detecting that the PV corresponding to the volume content is created;
performing (S36), based on the storage volume in the Create_Check state, query check on the persistent volume directory, the PVC, the PV and an association relationship between PVCs and PVs; and
changing (S37) the state of the storage volume to an Available state upon detecting that the persistent volume directory, the PVC and the PV are present and the association relationship between PVCs and PVs matches the mapping relationship between PVCs and PVs in the volume attribute information.

3. The method for persistent data processing according to claim 1, wherein after the step of creating the persistent volume directory corresponding to the volume content in the NAS type server, and the step of creating the path information for a persistent volume on the virtual container management platform, the method for persistent data processing further comprises a step of:
uninstalling (S40), upon detecting an uninstalling instruction for the storage volume, the persistent volume directory, the path information of the persistent volume and the volume content in the storage volume in sequence based on the uninstalling instruction.

4. The method for persistent data processing according to claim 1, wherein after the step of creating the persistent volume directory corresponding to the volume content in the NAS type server, and the step of creating the path information for a persistent volume on the virtual container management platform, the method for persistent data processing further comprises steps of:
deleting (S40), upon detecting a modification instruction for the storage volume, the original path information of the persistent volume in the storage volume based on the modification instruction, and establishing new path information of the persistent volume; and
modifying by quota (S50), based on the modification instruction, the volume content and the persistent volume directory in the storage volume.

5. The method for persistent data processing according to claim 1, wherein after the step of creating the persistent volume directory corresponding to the volume content in the NAS type server, and creating the path information for a persistent volume on the virtual container management platform, the method for persistent data processing further comprises step of:
acquiring (S40), upon detecting a query instruction for the storage volume, information of the storage volume from the NAS type server based on the query instruction, and returning the information of the storage volume after encapsulation.

6. The method for persistent data processing according to claim 1, wherein the volume attribute information comprises information of a volume type, a Volume Namespace, a Volume Name, and a volume size, and
the NAS type server comprises a network file system (NFS) system server, a GlusterFS distributed storage system server, and a Ceph distributed storage system server.

7. A device for persistent data processing, wherein the device for persistent data processing comprises: a memory (1005), a processor (1001), a communication bus (1002) and a program for persistent data processing stored in the memory,
the communication bus (1002) is configured to enable communication connection between the processor and the memory (1005), and
the processor (1001) is configured to execute the program for persistent data processing to implement the steps of the method for persistent data processing according to any one of claims 1 to 6.

8. A system for persistent data processing, wherein the system for persistent data processing comprises a virtual container management platform, a system server, and the device for persistent data processing according to claim 7.

9. A readable storage medium, wherein the readable storage medium stores a program for persistent data processing which, when executed by a processor, implements the steps of the method for persistent data processing according to any one of claims 1 to 6.

## Patentansprüche

1. Verfahren zur persistenten Datenverarbeitung, wobei die Daten eine containerisierte Applikation umfassen, die auf einer virtuellen Container-Management-Plattform installiert ist, und das Verfahren zur persistenten Datenverarbeitung die folgenden Schritte umfasst:
Erfassen von Anforderungsinformationen, um eine persistente Verarbeitungsanweisung auszulösen, wobei die Anforderungsinformationen repräsentative Zustandsübertragungsinformationen sind, die Informationen enthalten, die den Datenträgertyp, den Datenträgernamen und die Datenträgergröße der containerisierten Applikation umfassen;
Erfassen (S10) von Datenträger-Attribut-Informationen und dem Datenträger-Inhalt der containerisierten Applikation auf der Grundlage der persistenten Verarbeitungsanweisung, wobei die Datenträger-Attribut-Informationen und der Datenträger-Inhalt alle internen Daten sind, die die containerisierte Applikation bilden, wobei die Datenträger-Attribut-Informationen auf der Grundlage der Anforderungsinformationen erfasst oder von allen internen Daten der containerisierten Applikation abstrahiert werden;
Erzeugen (S20) eines Datenträgerspeichers in einem Server vom Typ Netzwerkzugriffsspeicher (NAS) auf der Grundlage der Datenträger-Attribut-Informationen und Speichern des Datenträger-Inhalts in dem Datenträgerspeicher; und
Erzeugen (S30), basierend auf den Datenträger-Attribut-Informationen, eines persistenten Datenträgerverzeichnisses, das dem Datenträger-Inhalt in dem NAS-Typ-Server entspricht, und Erzeugen von Pfad-Informationen für einen persistenten Datenträger auf der virtuellen Container-Management-Plattform,
wobei die Pfad-Information des persistenten Datenträgers einen persistenten Datenträgeranspruch (PVC) und einen persistenten Datenträger (PV) umfasst, und
der Schritt des Erzeugens des persistenten Datenträgerverzeichnisses, der dem Datenträger-Inhalt in dem NAS-Typ-Server entspricht, und des Erzeugens der Pfad-Information für den persistenten Datenträger auf der virtuellen Container-Management-Plattform die folgenden Unterschritte umfasst:
Aufzeichnen (S31) eines Zustands des Datenträgerspeichers als Zustand "Create_Initial", wenn festgestellt wird, dass der Datenträgerspeicher die Speicherung des Datenträger-Inhalts abgeschlossen hat;
Erzeugen (S32) des persistenten Datenträger-Verzeichnisses, das dem Inhalt des Datenträgers im NAS-Typ-Server entspricht, auf der Grundlage des Datenträgerspeichers im Zustand "Create_Initial" und der Datenträger-Attribut-Informationen, und Ändern des Zustands des Datenträgerspeichers in einen Zustand "Create_PVC";
Erzeugen (S33), basierend auf dem Datenträgerspeicher im Zustand "Create_PVC" und den Datenträger-Attribut-Informationen, eines PVC, der dem Datenträger-Inhalt auf der virtuellen Container-Management-Plattform entspricht, und Ändern des Zustands des Datenträgerspeichers in einen Zustand "Create_PV"; und
Erzeugen (S34) eines PV, der dem Datenträger-Inhalt auf der virtuellen Container-Management-Plattform entspricht, basierend auf dem Datenträgerspeicher im Zustand "Create_PV" sowie einer Abbildungsbeziehung zwischen PVCs und PVs in den Datenträger-Attribut-Informationen.

2. Verfahren zur persistenten Datenverarbeitung nach Anspruch 1, wobei nach dem Schritt des Erzeugens des PV, der dem Datenträger-Inhalt auf der virtuellen Container-Management-Plattform entspricht, der Schritt des Erzeugens des persistenten Datenträgerverzeichnisses, das dem Datenträger-Inhalt auf dem NAS-Typ-Server entspricht, und der Schritt des Erzeugens der Pfad-Informationen für einen persistenten Datenträger auf der virtuellen Container-Management-Plattform ferner die folgenden Unterschritte umfasst:
Ändern (S35) eines Zustands des Datenträgerspeichers in einen Zustand "Create_Check", wenn festgestellt wird, dass der dem Datenträger-Inhalt entsprechende PV erzeugt ist;
Durchführen (S36), basierend auf dem Datenträgerspeicher im Zustand "Create_Check", einer Abfrageprüfung des persistenten Datenträgerverzeichnisses, des PVC, des PV und einer Assoziationsbeziehung zwischen PVCs und PVs; und
Ändern (S37) des Zustands des Datenträgerspeichers in einen Zustand "Available" ("Verfügbar"), wenn festgestellt wird, dass das persistenten Datenträgerverzeichnis, der PVC und der PV vorhanden sind und die Assoziationsbeziehung zwischen PVCs und PVs mit der Abbildungsbeziehung zwischen PVCs und PVs in den Datenträger-Attribut-Informationen übereinstimmt.

3. Verfahren zur persistenten Datenverarbeitung nach Anspruch 1, wobei nach dem Schritt des Erzeugens des persistenten Datenträgerverzeichnisses, das dem Datenträger-Inhalt in dem NAS-Typ-Server entspricht, und dem Schritt des Erzeugens der Pfad-Informationen für einen persistenten Datenträger auf der virtuellen Container-Management-Plattform das Verfahren zur persistenten Datenverarbeitung ferner einen Schritt umfasst:
Deinstallieren (S40) des persistenten Datenträgerverzeichnisses, der Pfad-Informationen des persistenten Datenträgers und des Datenträger-Inhalts auf dem Datenträgerspeicher in einer Reihenfolge, die auf der Deinstallationsanweisung basiert, wenn eine Deinstallationsanweisung für den Datenträgerspeicher erkannt wird.

4. Verfahren zur persistenten Datenverarbeitung nach Anspruch 1, wobei nach dem Schritt des Erzeugens des persistenten Datenträgerverzeichnisses, das dem Datenträger-Inhalt im NAS-Typ-Server entspricht, und dem Schritt des Erzeugens der Pfad-Informationen für einen persistenten Datenträger auf der virtuellen Container-Management-Plattform das Verfahren zur persistenten Datenverarbeitung ferner die folgenden Schritte umfasst:
Löschen (S40) der ursprünglichen Pfad-Information des persistenten Datenträgers in dem Datenträgerspeicher auf der Grundlage der Modifikationsanweisung, wenn eine Modifikationsanweisung für den Datenträgerspeicher erkannt wird, und Erzeugen einer neuen Pfad-Information des persistenten Datenträgers; und
Ändern des Datenträger-Inhalts und des persistenten Datenträgerverzeichnisses auf dem Datenträgerspeicher durch Quoten (S50) auf der Grundlage der Modifikationsanweisung.

5. Verfahren zur persistenten Datenverarbeitung nach Anspruch 1, wobei nach dem Schritt des Erzeugens des persistenten Datenträgerverzeichnisses, das dem Datenträgers-Inhalt auf dem NAS-Typ-Server entspricht, und des Erzeugens der Pfad-Informationen für einen persistenten Datenträger auf der virtuellen Container-Management-Plattform das Verfahren zur persistenten Datenverarbeitung ferner den folgenden Schritt umfasst:
Erfassen (S40) von Datenträgerspeicher-Informationen von dem NAS-Typ-Server auf der Grundlage der Abfrageanweisung, wenn eine Abfrageanweisung für den Datenträgerspeicher erfasst wird, und Zurückgeben der Datenträgerspeicher-Informationen nach der Verkapselung.

6. Verfahren zur persistenten Datenverarbeitung nach Anspruch 1, wobei die Datenträger-Attribut-Informationen Informationen über einen Datenträger-Typ, einen Datenträger-Namensraum, einen Datenträger-Namen und eine Datenträger-Größe umfassen, und
der NAS-Typ-Server einen NFS-Systemserver (Network File System), einen GlusterFS-Systemserver (Distributed Storage System) und einen Ceph-Systemserver (Distributed Storage System) umfasst.

7. Vorrichtung zur persistenten Datenverarbeitung, wobei die Vorrichtung zur persistenten Datenverarbeitung umfasst: einen Speicher (S1005), einen Prozessor (1001), einen Kommunikationsbus (1002) und ein im Speicher gespeichertes Programm zur persistenten Datenverarbeitung,
der Kommunikationsbus (1002) konfiguriert ist, um eine Kommunikationsverbindung zwischen dem Prozessor und dem Speicher (1005) zu ermöglichen, und
der Prozessor (1001) konfiguriert ist, dass er das Programm zur persistenten Datenverarbeitung ausführt, um die Schritte des Verfahrens zur persistenten Datenverarbeitung nach einem der Ansprüche 1 bis 6 zu implementieren.

8. System zur persistenten Datenverarbeitung, wobei das System zur persistenten Datenverarbeitung eine virtuelle Container-Management-Plattform, einen Systemserver und die Vorrichtung zur persistenten Datenverarbeitung gemäß Anspruch 7 umfasst.

9. Lesbares Speichermedium, wobei das lesbare Speichermedium ein Programm für die persistente Datenverarbeitung speichert, dass, wenn es von einem Prozessor ausgeführt wird, die Schritte des Verfahrens für die persistente Datenverarbeitung gemäß einem der Ansprüche 1 bis 6 implementiert.

## Revendications

1. Procédé de traitement de données persistantes, dans lequel les données comprennent une application conteneurisée installée sur une plateforme virtuelle de gestion de conteneurs, et le procédé de traitement de données persistantes comprend des étapes consistant à :
acquérir des informations de demande pour déclencher une instruction de traitement persistante, les informations de demande étant des informations de transfert d'état représentationnel contenant des informations sur le type de support de données, le nom de support de données et la taille de support de données de l'application conteneurisée ;
acquérir (S10), lors de la détection de l'instruction de traitement persistant pour une application conteneurisée, des informations sur les attributs de support de données et le contenu de support de données de l'application conteneurisée sur la base de l'instruction de traitement persistant, les informations sur les attributs de support de données et le contenu de support de données étant toutes les données internes formant l'application conteneurisée, les informations sur les attributs de support de données étant acquises sur la base des informations de demande ou extraites de toutes les données internes de l'application conteneurisée ;
créer (S20), sur la base des informations sur les attributs de support de données, un support de données de stockage dans un serveur de type NAS (network access storage) et stocker le contenu de support de données dans le support de données de stockage ; et
créer (S30), sur la base des informations sur les attributs de support de données, un répertoire de support de données persistant correspondant au contenu de support de données dans le serveur de type NAS, et créer des informations de chemin d'accès pour un support de données persistant sur la plate-forme de gestion de conteneurs virtuels,
dans lequel les informations de chemin de support de données persistant comprennent une revendication de support de données persistant, PVC, et un support de données persistant, PV, et
l'étape consistant à créer le répertoire de support de données persistant correspondant au contenu de support de données dans le serveur de type NAS, et à créer les informations de chemin pour le support de données persistant sur la plate-forme de gestion de conteneurs virtuels comprend les sous-étapes suivantes :
enregistrer (S31), après avoir détecté que le support de données de stockage a fini de stocker le contenu de support de données, un état de support de données de stockage en tant qu'état « Create_Initial » ;
créer (S32), sur la base de support de données de stockage dans l'état « Create_Initial » et des informations d'attribut de support de données, le répertoire de support de données persistant correspondant au contenu de support de données dans le serveur de type NAS, et changer l'état de support de données de stockage en un état « Create_PVC » ;
créer (S33), sur la base de support de données de stockage dans l'état « Create_PVC » et des informations sur les attributs de support de données, un PVC correspondant au contenu de support de données sur la plate-forme de gestion de conteneurs virtuels, et modifier l'état de support de données de stockage pour le faire passer à l'état « Create_PV » ; et
créer (S34), sur la base de support de données de stockage dans l'état « Create_PV » ainsi que d'une relation de mappage entre les PVC et les PV dans les informations d'attributs de support de données, un PV correspondant au contenu de support de données sur la plate-forme de gestion de conteneurs virtuels.

2. Procédé de traitement de données persistantes selon la revendication 1, dans lequel après l'étape de création du PV correspondant au contenu de support de données sur la plateforme de gestion de conteneurs virtuels, l'étape de création du répertoire de support de données persistant correspondant au contenu de support de données dans le serveur de type NAS, et l'étape de création des informations de chemin d'accès pour un support de données persistant sur la plateforme de gestion de conteneurs virtuels comprend en outre des sous-étapes consistant à :
changer (S35) d'un état de support de données de stockage à l'état « Create_Check » après détection de la création de la PV correspondant au contenu de support de données ;
effectuer (S36), sur la base de support de données de stockage dans l'état « Create_Check », une vérification par interrogation du répertoire de support de données persistants, du PVC, du PV et d'une relation d'association entre les PVC et les PV ; et
changer (S37) de l'état de support de données de stockage à l'état « available » (« disponible ») après détecter la présence du répertoire de support de données persistant, du PVC et du PV et de la correspondance entre les PVC et les PV dans la relation de mappage entre les PVC et les PV dans les informations d'attributs de support de données.

3. Procédé de traitement de données persistantes selon la revendication 1, dans lequel après l'étape de création du répertoire de support de données persistant correspondant au contenu de support de données dans le serveur de type NAS, et l'étape de création des informations de chemin d'accès pour un support de données persistant sur la plateforme de gestion de conteneurs virtuels, le procédé de traitement de données persistantes comprend en outre une étape consistant à :
désinstaller (S40), après avoir détecté une instruction de désinstallation pour le support de données de stockage, le répertoire de support de données persistant, les informations de chemin de support de données persistant et le contenu de support de données dans le support de données de stockage en séquence sur la base de l'instruction de désinstallation.

4. Procédé de traitement de données persistantes selon la revendication 1, dans lequel après l'étape de création du répertoire de support de données persistant correspondant au contenu de support de données dans le serveur de type NAS, et l'étape de création des informations de chemin d'accès pour un support de données persistant sur la plateforme de gestion de conteneurs virtuels, le procédé de traitement de données persistantes comprend en outre des étapes consistant à :
supprimer (S40), lors de la détection d'une instruction de modification de support de données de stockage, les informations de chemin originales de support de données persistant dans le support de données de stockage sur la base de l'instruction de modification, et établir de nouvelles informations de chemin de support de données persistant ; et
modifier par quota (S50), sur la base de l'instruction de modification, le contenu de support de données et le répertoire de support de données persistant dans le support de données de stockage.

5. Le procédé de traitement de données persistantes selon la revendication 1, dans lequel après l'étape de création du répertoire de support de données persistant correspondant au contenu de support de données dans le serveur de type NAS, et la création des informations de chemin d'accès pour un support de données persistant sur la plateforme de gestion de conteneurs virtuels, le procédé de traitement de données persistantes comprend en outre l'étape consistant à :
acquérir (S40), lors de la détection d'une instruction de requête pour le support de données de stockage, des informations sur le support de données de stockage à partir du serveur de type NAS sur la base de l'instruction de requête, et renvoyer les informations sur le support de données de stockage après encapsulation.

6. Procédé de traitement de données persistantes selon la revendication 1, dans lequel les informations d'attributs de support de données comprennent des informations sur un type de support de données, un espace de nommage de support de données, un nom de support de données et une taille de support de données.
le serveur de type NAS comprend un serveur de système de fichiers réseau (NFS), un serveur de système de stockage distribué GlusterFS et un serveur de système de stockage distribué Ceph.

7. Dispositif de traitement persistant des données, dans lequel le dispositif de traitement persistant des données comprend : une mémoire (S1005), un processeur (1001), un bus de communication (1002) et un programme de traitement persistant des données stocké dans la mémoire,
le bus de communication (1002) est configuré pour permettre une connexion de communication entre le processeur et la mémoire (1005), et
le processeur (1001) est configuré pour exécuter le programme de traitement de données persistantes afin de mettre en oeuvre les étapes du procédé de traitement de données persistantes selon l'une quelconque des revendications 1 à 6.

8. Système de traitement de données persistantes, dans lequel le système de traitement de données persistantes comprend une plateforme de gestion de conteneurs virtuels, un serveur système et le dispositif de traitement de données persistantes selon la revendication 7.

9. Support de stockage lisible, dans lequel le support de stockage lisible stocke un programme de traitement de données persistantes qui, lorsqu'il est exécuté par un processeur, met en oeuvre les étapes du procédé de traitement de données persistantes selon l'une quelconque des revendications 1 à 6.
